# EUROPEAN PATENT SPECIFICATION

(11) **EP 2 706 697 B1**
(45) Date of publication and mention of the grant of the patent: **05.08.2015**
(21) Application number: 12306075.8
(22) Date of filing: 07.09.2012
(51) Int. Cl.: H04L 1/06, H04L 1/18

(54) **Method for providing automatic repeat request error control based on relaying terminals, and related terminal and ARQ control center**
Verfahren zur Bereitstellung einer automatischen Wiederholungsanfragefehlerkontrolle auf Basis von Terminals mit Relaisfunktion, und zugehöriges Endgerät und ARQ-Kontrollcenter
Procédé pour fournir un contrôle d'erreurs avec demande de répétition automatique à la base des terminaux avec fonction de relais, et son terminal et centre de contrôle ARQ

(43) Date of publication of application: 12.03.2014
(73) Proprietor: ALCATEL LUCENT, 92100 Boulogne-Billancourt (FR)
(72) Inventor: Gacanin, Haris, 2600 Antwerpen (BE)
(74) Representative: ALU Antw Patent Attorneys

(56) References cited:
- EP-A1- 1 843 488
- EP-A1- 2 391 045
- WO-A2-2008/038895

## Description

### Field of the invention

The present invention relates to a method for providing automatic repeat request error control in a broadcast communication network, and a supporting terminal and ARQ control center for executing the method.

### Background

In order to further improve home network transmission performance an automatic repeat request mechanism, shortly called ARQ mechanism, can be applied as an error control technique in order to achieve reliable communication over an unreliable channel. Such an ARQ mechanism uses acknowledgements i.e. messages that are sent by the receiver and that are indicating that it has correctly received a packet; and timeouts which are specified periods of time allowed to elapse before an acknowledgment has to be received. If the sender receives a negative acknowledgment, shortly called NACK or does not receive an acknowledgment, shortly called ACK, before a predefined timeout, the sender usually re-transmits the packet until the sender receives an ACK or exceeds a predefined number of re-transmissions.

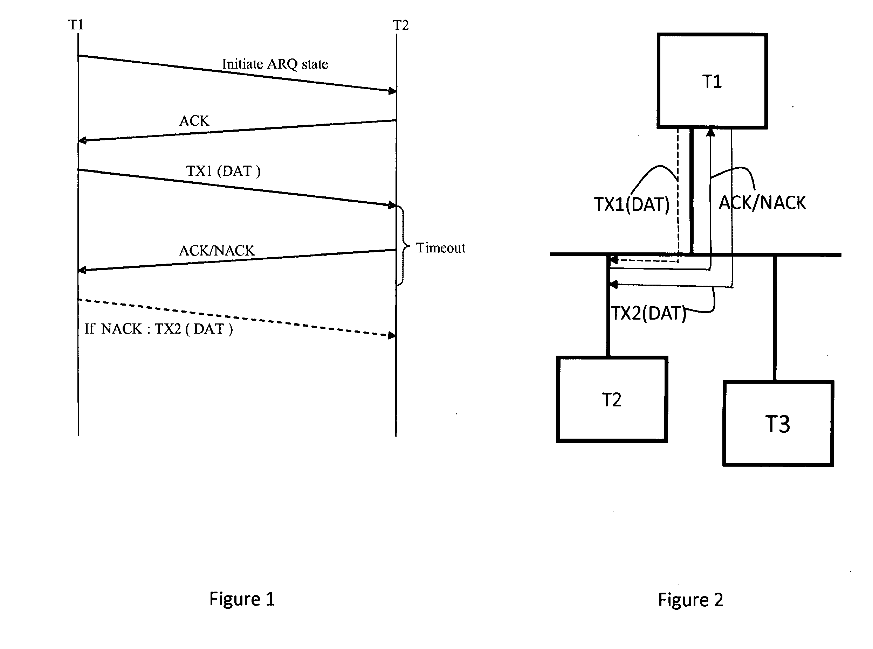

A schematic of such a conventional ARQ mechanism is illustrated in a broadband communication network as shown in Figure 1. At first an ARQ mechanism is initialized via control messages between Terminal 1 and Terminal 2. Thereafter, a first transmission of a data packet is transmitted by the first terminal. This is followed by messages being sent by the receiver terminal which are indicating that it has correctly or not correctly received the data packet. If the sender receives a negative acknowledgment NACK or does not receive an acknowledgment ACK before a predefined timeout, the sender re-transmits the packet until it receives a positive ACK or until it exceeds a predefined number of re-transmissions.

Such a conventional approach is suitable for broadcast communication networks such as home networks with only a few deployed terminals within one domain. In such small domains the collision problem is not a relevant issue.

However, in the event of larger broadcast communication networks collision might become a problem and the question arises of how to further improve the communication reliability in the network.

An apparatus and method for relaying between a base station and a mobile station, and the base station are disclosed in the WO 2008/038895 A2 (Korea Electyronics Telecom; Lee Hyo-Jin; lee Hee-Soo;) being published on April 3, 2008. The application discloses a cooperative relay station that relays between a base station and a mobile station when retransmitting a signal. It also discloses a base station that receives a signal from a mobile station in a mutual cooperation with the cooperative relay station. After the cooperative relay station receives and decodes a signal that the mobile station transmits to the base station or a service relay station, if an error of the decoded signal does not exist, it stores the received signal. If an error occurs when the base station decodes the signal that the mobile station transmits, the base station requests retransmission for the signal with the error to the cooperative relay station. If the cooperative relay station gets a request of retransmission, it transmits the signal that the base station requests to the base station. In this way, since an error rate may be reduced when the base station requests retransmission of the signal, resource reuse efficiency may become improved, interference may be reduces, and it is easy to adapt to a service being sensitive to the time delay.

A radio communication method , relay station device and radio receiver device is disclosed in the EP 1843488 A1 (Matsushita Electric ind co Itd) being published at October 10, 2007. It describes a radio communication method or the like for making compatible and improvement in error rate characteristics and a reduction in delay. The radio communication method is used in a mobile communication system including a mobile station, a relay station and a base station. A transmitted signal containing a signal addressed to the base station is transmitted at first from the mobile station to the relay station. A non-reproduced relay signal obtained in the relay station from the transmitted signal is transmitted from the relay station to the base station. On the basis of the reception result of the non-reproduced relay signal at the bases station, a retransmission request of the transmitted signal is transmitted from the base station. A reproduced relay signal, as obtained from the transmitted signal in the relay station, is transmitted from the relay station to the base station in accordance with the re-transmission request transmitted from the base station.

### Summary

The scalability and transmission in broadcast communication networks with a larger number of terminals is improved.

According to an aspect of the present application the method comprises not forwarding by the inter-domain bridge erroneous received packets from the first domain towards the second domain. Herefor the ARQ control center comprises a decision agent for deciding not to forward by the inter-domain bridge erroneous received packets from the first domain towards the second domain. Herewith the ARQ mechanism is not only segmented over the different domains, but also the overall transmission towards another domain is blocked, on behalf of a terminal in the other domain, upon reception by the inter domain bridge of a non-qualitative data packet. Badly received data packets are not further forwarded to its destination. This relieves the overall load in the complete home network.

According to a further aspect of the present application, there is provided a method for providing automatic repeat request error control in a broadcast communication network, the method comprising:
- a first transmitting step of transmitting a data packet by a first terminal towards a second terminal; and
- receiving this data packet also by a third terminal and storing a copy of the data packet by the third terminal; and
- determining an ARQ failure indication for the first transmitting attempt of the data packet; and
- after such a determination of such an ARQ failure, performing a second transmitting step of transmitting towards the second terminal, during an identical time-interval, of
   a) the data packet by the first terminal; and
   b) the copy of the data packet by the third terminal.

It is an advantage that due to the second transmission phase, as a response to the ARQ failure determination such as a negative acknowledgement NACK, the third terminal supports the first terminal within the broadcast communication network whereby a copy of the same data packet is available at the second terminal. By increasing the efficient signal-to-noise ratio level SNR, the decision reliability level for correctly detecting the data packet is improved at the second terminal. In this way further re-transmission of the same data packet is significantly reduced.

The broadcast nature of the physical layer interface can be exploited to enable assistance of other terminals in the broadcast network in order to create a more efficient and reliable ARQ mechanism. Indeed, all devices within the broadcast communication network share the same broadcast channel and they are able to receive all transmitted signals. So, since all terminals in the broadcast network receive the data packet and the ARQ control messages ACK/NACK, some of the terminals can be used to assist the ARQ control mechanism in order to improve the reliability of the detection of the data packets at the receiving device.

According to an embodiment of the application a supporting terminal for supporting a first terminal in an ARQ error control mechanism, in a broadcast communication network, is provided. Such a supporting terminal comprises a receiver for receiving a data packet being transmitted by the first terminal over the broadcast communication network towards a second terminal; and a storing means for storing a copy of the data packet; and a transmitter for transmitting, in the event of determination of an ARQ failure indication regarding the firstly transmitted data packet, the copy of the data packet during an identical time-interval as wherein the first terminal retransmits the data packet towards the second terminal. So, the supporting terminal is used in order to assist the conventional data re-transmission i.e. it is used to assist the communication with the goal of increasing the reliability of the decision regarding the reception of the data packet with an acceptable BER. The presence of other available terminals is exploited to improve the transmission efficiency.

In a further aspect of the method of the present invention the method comprises selecting by an ARQ control center during a previous step the third terminal as an ARQ supporting terminal for the first terminal based upon a quality of transmission and activity in the broadcast communication network. Indeed without any pre-selection, all terminals in the broadcast network could react upon an ARQ failure indication which would not be in favor of the load in the network. According to this embodiment some "free" i.e. not active terminals in the same broadcast network as the first terminal are pre-selected and used in order to assist the conventional data re-transmission towards the second terminal. An efficient utilization of the "free" terminals further increases the communication reliability through better signal detection by the terminal which should receive the data packet.

The pre-selection of one or more supporting terminals for a first terminal is based upon the quality of the transmission within the broadcast network. A terminal being located near by the receiving terminal can be pre-selected to support a terminal being located further away. A terminal with a good quality link towards the receiving terminal can be pre-selected to support transmission of a terminal with a bad quality link towards the receiving terminal.

The pre-selection of one or more supporting terminals for a first terminal is also based upon the availability of the terminal. A terminal with rather low activity can be selected to support an active first terminal i.s.o. selecting a terminal with already a high activity for its own actual transmission.

In an embodiment of the ARQ control center in a broadcast communication center, the ARQ control center comprises a selector agent for selecting, based upon quality of transmission and activity in the broadcast communication network, a terminal i.e. the third terminal as an ARQ supporting terminal for supporting the first terminal.

In another aspect of the application the method further comprises a step of coordinating by means of an ARQ control center the second transmitting step for substantially simultaneous transmission of both packets i.e. the re-transmission of the data packet by the first terminal and the copy of the data packet by the third terminal.

Such a coordinating step is executed by an ARQ control center in a further aspect of the application. The ARQ control center comprises hereby a coordinating agent for coordinating substantially simultaneous transmission of a copy of a data packet by a supporting terminal i.e. the third terminal and a retransmit of the data packet by the first terminal.

It has to be explained that it is important in the broadcast network to transmit both copies of the data packet simultaneously. The transmission of the copy of the data packet is transmitted substantially simultaneously with the source terminal i.e. the first terminal in order to provide multiple copies of the original data packet over independent paths and in order to hereby increase the decision reliability at the request transmitter. So the signal-to-noise ratio is improved at the first terminal. An additional copy of the original data is transmitted via statistically independent channels, which is equivalent to spatial diversity.

It has to be explained that an ARQ failure indication can either be determined by another device in the network which triggers hereafter the terminal(s) for (re)transmission or an ARQ failure indication can either be determined by the terminal itself based upon e.g. time-out which is a predetermined period that has been elapsed before an acknowledgement of good reception has been received.

According to this first implementation aspect a receiving terminal determines a SNR ratio for the received packet. Based upon SNR, the receiving terminal determines whether the packet is good received or not. In the event of a bad reception, an "ARQ failure indication" has been determined. Hereby a Not Acknowledge i.e. a NACK control message is transmitted to the transmitting terminal which reflects a question for (re)transmission by the transmitting first terminal and a supporting third terminal.

According to the second implementation aspect, the transmitting terminal as well as the supporting terminals needs to measure the time-out. The transmitting terminal determines the time-out in function of the time of the first transmission of the data packet and a first pre-determined period of time-out. The supporting terminals determine the time-out in function of the reception of the data packet from the first transmission and another pre-determined period of time-out. Both kind of terminals decides for themselves for a (re)transmission of the data packet. So, the "ARQ failure indication" is determined by the terminals themselves.

Now, in a further aspect of the present application the ARQ failure indication can as well be determined by an ARQ control center by using cyclic redundancy check (CRC) control.

Indeed, according to the first implementation aspect, the SNR ratio can be forwarded to the ARQ control center whereby the ARQ control center decides whether the SNR is indeed within the acceptable range or not. Alternatively, the ARQ control center can decides the SNR based upon its own reception of the data packet due to the first transmission.

Furthermore, according to the above second implementation aspect the ARQ control center determines the time-out in function of the reception of the data packet from the first transmission and still another pre-determined period of time-out.

So, according to this further aspect of the present application, the previous described step of "determining an ARQ failure indication" for the first transmission of the data packet is executed by the ARQ control center. Such an ARQ control center comprises hereby a determining means for determining an "ARQ failure indication" based upon a quality of transmission of the data packet being first transmitted by a first terminal towards a second terminal. The determination of the status of "ARQ failure indication" initiates thereby a transmission of a copy of the data packet by a supporting terminal such as the third terminal during an identical time-interval as wherein the first terminal retransmits the data packet towards the second terminal.

According to a further aspect of the present application, the ARQ control center determines indeed an "ARQ failure indication" such as described above. In addition the method further comprises generating by the ARQ control center an ARQ control signal; and transmitting the ARQ control signal into the broadcast communication network. Herefor the ARQ control center comprises a generating agent for generating an ARQ control signal; and a transmitter for transmitting the ARQ control signal into the broadcast communication network. In this way, the ARQ control center triggers on behalf of the receiving terminal i.e. the second terminal the (re)-transmission of the data packet.

According to a further aspect of the present method, the method comprises implementing the broadcast communication network with a home network that comprises a plurality of domains. An inter-domain bridge is coupled between a first domain that comprises the first terminal and the third terminal; and a second domain that comprises the second terminal.

In such an implementation of a multiple-domain network i.e. an inter-domain communication network, a conventional ARQ mechanism would be installed from the source to the destination over the different domains. The network efficiency would significantly degrade since all re-transmissions must be done over different domains across the entire network. In e.g. ITU G.hn standard the home network is characterized by its different domains and their corresponding mediums such as twisted-pairs, coax and power line cables. Although, installation of an ARQ mechanism in a G.hn home network is considered to improve the transmission reliability, this may be indeed an adequate ARQ mechanism as long as the home network terminals belong to the same domain i.e. inter-domain communication without relaying and as long as the number of terminals is not large so that a possible collision problem does not escalate. In addition the network efficiency significantly degrades since the re-transmission requests and re-transmissions must be done over the different domains across the entire network for the inter-domain communication with a conventional ARQ mechanism. In the case of such a multiple-domain network i.e. inter-domain communication, application of a conventional ARQ mechanism from the source to the destination over the different domains, the network efficiency would significantly degrade since all the re-transmissions must be done over the different domains across the entire network.

A solution to the problem is brought with the method according to the present application. According to the application an efficient utilization of the "free" terminals within the same domain of the broadcast home network is applied in order to further increase the communication reliability through better signal detection. Furthermore, according to the present approach with the ARQ control center, the ARQ mechanism is segmented, corresponding to different domains and exploits the presence of other available terminals to improve the transmission efficiency. Indeed, due to the integration of the ARQ control center in the inter domain bridge, the ARQ control center is enabled to determine, on behalf of a second terminal in another domain, a failure indication. Furthermore, the ARQ control center also generates and transmits, on behalf of the receiving terminal in another domain, an ARQ control signal. The ARQ mechanism is segmented.

It is to be noticed that the term 'comprising', used in the claims, should not be interpreted as being limitative to the means listed thereafter. Thus, the scope of the expression 'a terminal comprising means A and B' should not be limited to terminals consisting only of components A and B. It means that with respect to the present invention, the only relevant components of the terminal are A and B.

Similarly, it is to be noticed that the term 'coupled', also used in the claims, should not be interpreted as being limitative to direct connections only. Thus, the scope of the expression 'a terminal A coupled to a terminal B' should not be limited to terminals or systems wherein an output of terminal A is directly connected to an input of terminal B. It means that there exists a path between an output of A and an input of B which may be a path including other terminals or means.

### Brief Description of the Figures

The above and other objects and features of the invention will become more apparent and the invention itself will be best understood by referring to the following description of an embodiment taken in conjunction with the accompanying drawings wherein :
Figure 1 represents the communication sequence between two terminals for a conventional ARQ mechanism; and
Figure 2 represents a block diagram of a telecommunication network showing the ARQ related communication; and
Figure 3 represents a block diagram of a broadcast telecommunication network showing the ARQ related communication according to the present invention; and
Figure 4 represents a block diagram of an alternative broadcast telecommunication network showing the ARQ related communication according to the present invention; and
Figure 5 represent a block diagram of a portion of a home network with an inter-domain bridge showing the ARQ related communication according to the present invention.

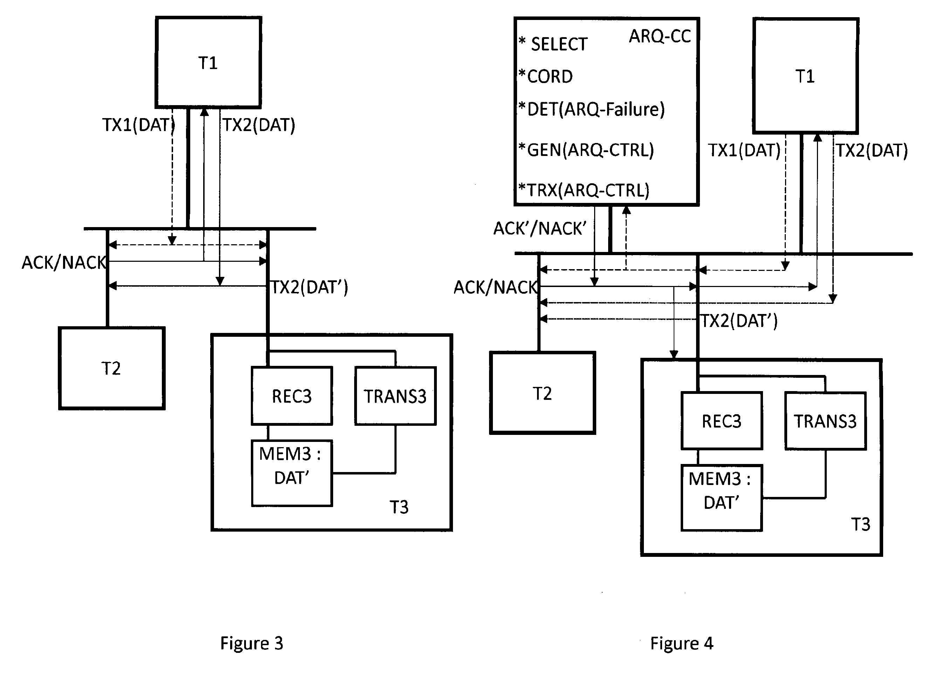

The working of the different devices in the respective networks according to the present invention in accordance with its telecommunication environment that is shown in Figures 3 to 5 will be explained by means of a functional description of the different blocks shown therein. Based on this description, the practical implementation of the blocks will be obvious to a person skilled in the art and will therefor not be described in details. In addition, the principle working of the method for providing automatic repeat request error control in a broadcast communication network according to the present invention will be described in further detail.

The number of transmitters shown in the figures is chosen for illustrative purposes only, and does not limit the generality of the invention in any way. Operation described in relation to a given terminal may apply, mutatis mutandis, to other terminals in the network.

### Detailed Description of Embodiments

Referring to Figure 1 and Figure 2 the communication sequence between two terminals in a telecommunication network for a conventional ARQ mechanism is shown.

According to conventional ARQ communication, an ARQ mechanism is initialized by means of control messages between the two terminals T1 and T2. This is shown with "Initiate ARQ state" in Figure 1. This initialization goes beyond the aim of the present invention and will not be further explained in details.

As mentioned above, Figure 2 shows block diagram of a telecommunication network showing the ARQ related communication. The network comprises as an matter of example three terminals coupled to each other T1, T2 and T3.

Hereafter a first transmission of a data packet is started by a sending terminal i.e. the first terminals T1 towards a receiving terminal i.e. the second terminal T2. This is shown with TX1 (DAT) i.e. a first transmission phase TX1 of the data packet DAT. The first transmission of the data packet is show by means of a striped arrow.

Hereafter an "ARQ failure indication" is determined. The determination of the "ARQ failure indication" can be implemented in different ways. A first embodiment is by means of a measurement of time-out periods either on the receiving side or on the transmitting side; and a second embodiment is by means of determination of a "bad" received packet by the receiving side. A "bad" received data packet is the reception of a data packet with a too high Signal-to-Noise ratio whereby the received data can't be acknowledged as being well received. Such a "bad" received packet is hereafter also called an "erroneous received data packet". According to such a situation a negative acknowledgement is transmitted from the receiving side towards the transmitting side. However, in the event of a good reception, a positive acknowledgement is transmitted from the receiving side towards the transmitting side. Both control signals are shown in Figure 1 and Figure 2 by the ACK/NACK arrow in full line.

Upon reception of an NACK trigger the first terminal is programmed according to a conventional ARQ mechanism to retransmit its data packet. This is shown in both Figures by means of TX2(DAT) i.e. a second transmission phase TX2 of the data packet DAT. The second transmission of the data packet is show by means of a dotted arrow.

Reference is now made to Figure 3 and Figure 4, each showing a block diagram of a broadcast telecommunication network showing the ARQ related communication according to the present invention.

The broadcast communication network comprises again by matter of an example three terminals T1, T2 and T3 coupled to each other.

According to an insight of the present invention, the broadcast character of the network is now exploited.

Indeed, the data packet DAT being transmitted by the first terminal T1 is also "seen" by the other terminals such as e.g. T3 in the network. This is shown by the striped arrow which extends now from the first terminal T1 towards the second terminal T2 but also up to the third terminal T3.

Even more, also ARQ control signals such as a NACK being transmitted on the broadcast network is also "seen" by the third terminal T3.

Furthermore a terminal such as T3 in the broadcast communication network is now further equipped according to the present invention to support a first terminal T1 during such an automatic repeat request error control mechanism i.e. not only the broadcast character exploited but also the signal (data and control) which are eventual not explicitly meant for terminals T3 but which are "seen" by T3 are now also handled by terminal T3.

Hereby the supporting third terminal T3 comprising:
- a receiver REC3 for receiving a data packet TX1(DAT) being transmitted by the first terminal T1 over the broadcast communication network towards a second terminal T2; and
- a storing means MEM3 for storing a copy of the data packet DAT'; and
- a transmitter TRANS3 for transmitting, in the event of determination of an ARQ failure indication for the data packet DAT, the copy of the data packet TX2(DAT') during an identical time-interval as wherein the first terminal T1 retransmits the data packet TX2(DAT) towards the second terminal T2.

In this way the third terminal T3 is enabled "to listen and to react" upon transmissions of data packets and ARQ control signals which might not be explicitly be meant for T3.

Indeed, the first additional action according to the present invention is the fact that T3 receives and stores a copy of a data packet DAT' which is not explicitly meant for T3. This is shown on Figures 3 and 4 by means of the functional blocks REC3 and MEM3:DAT'.

It has to be explained that the original data packet DAT and the copy of the data packet DAT' are basically comprising the same information but might slightly deviate from each other due to eventual faults which might have occurred during the first transmission of the data packet DAT.

Furthermore, T3 is enabled to react upon an "ARQ failure indication"-situation. As explained above, such an "ARQ failure indication"-situation might be determined by the terminal T3 itself such as e.g. time-out measurement; or might be signaled by means of an outside trigger such as e.g. reaction upon a NACK control signal.

Anyway, either one of the situations is sufficient for a supporting terminal T3 to transmit the copy of the data packet TX2(DAT') during an identical time-interval as wherein the first terminal T1 retransmits its data packet TX2(DAT) towards the second terminal T2.

According to an embodiment of the present invention the method comprises selecting by an ARQ control center during a previous step the third terminal T3 as an ARQ supporting terminal for the first terminal T1 based upon a quality of transmission and activity in the broadcast communication network. As explained above, it might be disadvantage for the load of the network if all extra terminals in the network start reacting as supporting terminal for each other. The method and apparatus according to the invention therefore provide more efficient use of the network resources by carrying out a previous step of preselecting and assigning only particular terminals, called supporting terminals. The pre-selection of the supporting terminals is based upon the quality of transmission and activity in the broadcast communication which is also explained above. Referring to Figure 3 it shows e.g. terminal T3 as supporting terminal for T1. Hereby T3 might have been preselected since the Quality of Service of the link between T3 and T2 is expected to be better as the Quality of Service of the link between T1 and T2. Referring to Figure 4 it shows e.g. terminal T3 as supporting terminal for T1. Hereby T3 might have been preselected since the T3 is located closer to T2 as T1.

Furthermore it has to be explained that the pre-selection might be performed by one of the terminals in the broadcast network but might as well be executed by a special dedicated ARQ Control Center. The ARQ control center is shown in Figure 4 by means of ARQ-CC. The functional block for execution of the pre-selection process is shown in Figure 4 by means of SELECT.

Figure 4 also shows potential additional functionality of the ARQ control center ARQ-CC.

Indeed, besides the pre-selection process of assigning supporting terminals to terminals that need to transmit a data packet, the ARQ control center also performs the coordination to ensure simultaneous transmission during the second transmission phase of the original data packet and one or more copies of the data packet. This is shown in Figure 4 by means of the CORD-function in the ARQ-CC.

In addition the ARQ-CC in Figure 4 is also enabled to determine an "ARQ- failure"-situation. This is shown in Figure 4 by means of the DET(ARQ-Failure) - function in the ARQ-CC.

The ARQ-Failure state might be determined by the ARQ-CC upon e.g. reception of a time-out signal from T2; or upon its own measurement of a time-out after reception of the original data packet DAT by the ARQ-CC ; or upon an erroneous reception of the data packet DAT.

Upon determination of such an ARQ(Failure)-Indication the ARQ-CC reacts by e.g. transmission of a NACK on the broadcast network.

For clarity and referring to Figure 4 the function DET(ARQ-Failure) is executed either by T2 (not shown) or it is either executed by the ARQ-CC. In the event when it is executed by T2, the terminal T2 ventilates this status by transmission of ACK/NACK. According to the alternative implementation i.e. in the event when the determining function is executed by the ARQ-CC, the ARQ-CC ventilates this to the broadcast network by transmission of the ACK'/NACK'. So, the ARQ-CC transmits an ARQ control message on behalf of T2 on the broadcast network. The ACK/NACK and ACK'/NACK' are shown in Figure 4 by means of full lines.

As explained above terminal T3 will as well react upon the ACK/NACK or ACK'/NACK' and transmits the copy of the data packet DAT' on the broadcast network (see dotted lines in Figure 4).

The generation and transmission of control signals ARQ-CTRL such as ACK'/NACK' is shown in Figure 4 respectively by means of GEN(ARQ-CTRL) and TRX(ARQ-CTRL).

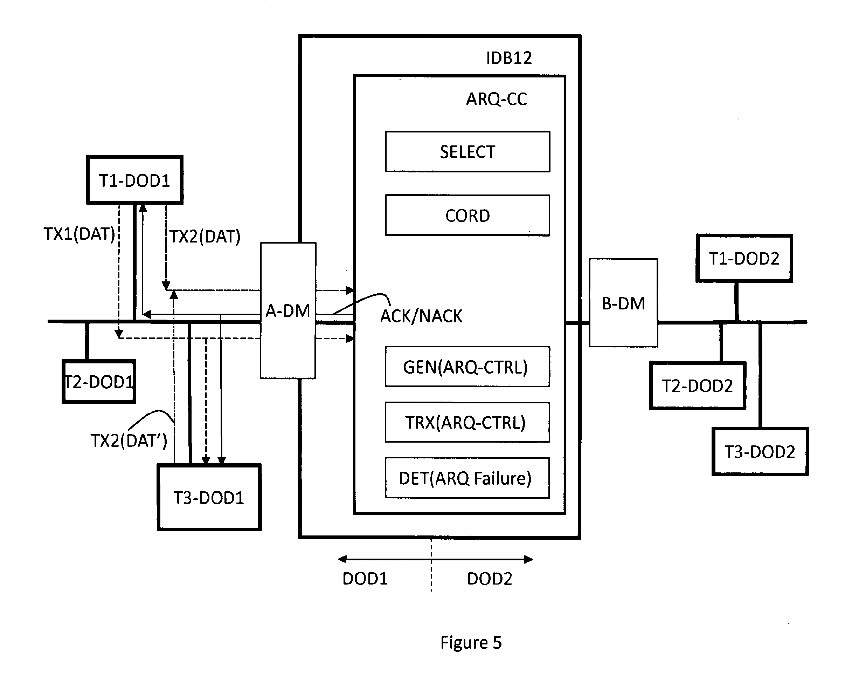

The advantages of the present invention becomes especially clear when applying the present invention in a broadcast home network. This will be explained now by referring to Figure 5.

A broadcast communication network being a broadcast home network is shown. The home network comprises a plurality of domains : Domain 1 DOD1 and Domain 2 DOD are shown. The first domain DOD1 comprises a first terminal T1 and the third terminal T3 and the second domain DOD2, comprises the said second terminal T2. Between both shown domains DOD1 and DOD2 an inter-domain bridge IDB12 is coupled.

The skilled person will understand that any reference to a home network in the following description are strictly exemplary an not intended to limit the scope of application of the present invention to residential settings. The invention is in fact also applicable to other broadcast communication networks with one or more network segments present in an architecture similar to the one implied by G.hn, including office, industry, hospitality, and educational settings. Likewise, references to a "G.hn" network should not be construed as limiting the invention to implementations complying to that particular family of ITU-T Recommendations.

The ARQ control center ARQ-CC is by matter of example located in the inter-domain bridge IDB12. The ARQ-CC is in charge of the following functions :
- Selecting the supporting terminals (See Figure 5 : SELECT) and domain selection in the case that transmission is not done directly between two domains, but rather over multiple-domains. Terminal and domain selection is done based on the estimated link-QoS and Service- QoS requirements between the source i.e. transmitting terminal and destination i.e. receiving terminal; and
- Initialization of the supporting terminals i.e. the "free" terminals within each initiated network domain; and
- Initialization of the centralized MAC protocol for the selected terminals (not shown); and
- Coordination of the simultaneous character of the (re)transmission of the original data packet and the copies of the data packet (See Figure 5 : CORD); and
- Determination of an ARQ-failure state (See Figure 5: DET(ARQ(Failure)); and
- Generation of an ARQ-Control signal (See Figure 5 : GEN(ARQ-CTRL) such as an Negative Acknowledgment control signal; and
- Transmission of an ARQ-Control signal (See Figure 5 : TRX(ARQ-CTRL)).

The ARQ mechanism is segmented into several parts depending on the number of selected domains in the home network.

After the initialization phase between a first terminals T1-DOD1 in Domain DOD1 and a second terminal T2-DOD2 in Domain DOD2, the data packets are transmitted by both terminals to their corresponding domain masters i.e. respectively Domain Master A-DM1 and B-DM-2. In this way data packet DAT is transmitted by T1-DOD1 towards T2-DOD2: See on Figure 5 : TX1 (DAT) with striped line.

Remark here that indeed all the respective terminals in Domain 1 and 2 will receive the packets from terminals T1-DOD1 and T2-DOD2, respectively.

The Domain Masters will decode the message headers and check for errors using CRC.

In the event when e.g. the Domain Master A-DM1 detects errors in the data packet DAT, a notification is sent to the ARQ control center ARQ-CC while the erroneous packet from T1-DOD1 will not be forwarded to T2-DOD2.

The ARQ Control Center ARQ-CC requests, by means of a NACK (shown with ACK/NACK full line) to T1-DOD1, on behalf of T2-DOD2, to re-transmit the data packet DAT.

As a response to NACK (full line) the partner terminals i.e. the supporting terminals such as T3-DOD1 within the domain DOD1 which were pre-selected by the ARQ control center ARQ-CC, re-transmit a copy DAT' of the data packet DAT that was broadcasted by T1-DOD1. In this way, several copies of the same packet (DAT and DAT') are available at the Domain Master A-DM1, which improves the decision reliability by increasing the efficient signal-to-noise (SNR) level for correct detection. Thus, further re-transmissions of the same packet may is significantly reduced.

So, in this way the ARQ request is send via the ARQ control center ARQ-CC only up to (from) the corresponding Domain Master i.e. A-DM1 in order to avoid congestions and network throughput degradation. Thus, the demanding ARQ Control Requests ARQ-CTRL is reduced at the mac/network level and is localized within the corresponding domain to improve the efficiency.

In the event when the Domain Master A-DM1 does not detect an error, then further signal processing is executed in order to recover the message from the received packet. Finally, further packet processing is done to retrieve the message.

In conclusion the inventive part of the present application is identified as exploitation of the broadcast nature of the physical layer interface in order to enable assistance of other "free" terminals e.g. T3 in order to create a more efficient and reliable ARQ mechanism. Since all terminals within a same domain receive ACK/NACK/DATA packets some of these terminals are pre-selected and used to assist the ARQ control center ARQ-CC and improve the reliability of detected data at the end terminal or the corresponding ARQ control center ARQ-CC. The supporting terminals e.g. T3 are pre-selected by the ARQ Control Center to provide the NACK-sender (T2 or ARQ-CC) with additional copies DAT' of the original data DAT via statistically independent channels, which is equivalent to antenna/spatial diversity. Thus, the increased SNR is available. The segmentation of the ARQ control over different broadcast networks such as G.hn domains in a home network improve the efficiency over the entire network. In this case the communication terminals T1 and T2 are not (re)sending packets on end-to-end basis. The value of the present invention is the ability to enable provision of a more robust system performance and consequently, higher transmission efficiency leading to better quality of service (QoS) for home network services. Furthermore, the network re-transmissions and thus, the waiting time can be reduced as well.

A final remark is that embodiments of the present invention are described above in terms of functional blocks. From the functional description of these blocks, given above, it will be apparent for a person skilled in the art of designing electronic terminals how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A method for providing automatic repeat request error control in a broadcast communication network, the method comprising:
- a first step of transmitting of a data packet (TX1(DAT)) by a first terminal (T1) towards a second terminal (T2); and
- receiving said data packet and storing a copy of said data packet (DAT') by a third terminal (T3); and
- determining an ARQ failure indication for said first transmitting; and
- thereafter performing a second step of transmitting towards said second terminal (T2), during an identical time-interval, of said data packet (TX2(DAT)) by said first terminal (T1) and said copy of said data packet (TX2(DAT')) by said third terminal (T3), and wherein said method comprises selecting by an ARQ control center during a previous step said third terminal (T3) as an ARQ supporting terminal for said first terminal (T1) based upon a quality of transmission link and activity in said broadcast communication network, and wherein said method comprises implementing said broadcast communication network with a home network that comprises a plurality of domains and an inter-domain bridge (IDB12) being coupled between
a first domain (DOD1), comprising said first terminal (T1) and said third terminal (T3); and
a second domain (DOD2), comprising said second terminal (T2), and wherein said ARQ control center being comprised in said inter-domain bridge (IDB2), and wherein said method comprises not further forwarding by said inter-domain bridge (IDB12) erroneous received packets from said first domain (DOD1) towards said second domain (DOD2).

2. The method of claim 1, wherein said method comprises a step of coordinating by and ARQ control center said second step of transmitting for substantially simultaneous transmission of both packets.

3. The method of claim 1, wherein said method comprises executing said determining step of said ARQ failure indication by means of an ARQ control center based upon a quality of transmission of said data packet in said broadcast communication network.

4. The method of claim 3, wherein said method further comprises, generating by said ARQ control center an ARQ control signal; and transmitting said ARQ control signal into said broadcast communication network.

5. An ARQ control center in a broadcast communication center that comprises a selector agent (SELECT) for selecting, based upon quality of transmission and activity in said broadcast communication network, a terminal (T3) as an ARQ supporting terminal for supporting a first terminal (T1); and
a determining means (DET(ARQ-Failure)) for determining an ARQ failure indication, based upon a quality of transmission of said data packet in said broadcast communication network, for a data packet (DAT) being first transmitted by said first terminal (T1) towards a second terminal (T2),
said ARQ failure indication initiating thereby a transmission of a copy of said data packet by said supporting terminal (T3), during an identical time-interval as wherein said first terminal (T1) retransmits said data packet towards said second terminal (T2); and
whereby said ARQ control center being comprised in an inter-domain bridge (IDB12) in a broadcast home network being coupled between a first domain (DOD1), comprising said first terminal (T1) and said third terminal (T3); and a second domain (DOD2), comprising said second terminal (T2); and further comprises a decision agent for deciding not to further forward by said inter-domain bridge (IDB12) erroneous received packets from said first domain (DOD1) towards said second domain (DOD2).

6. An ARQ control center in a broadcast communication network according to claim 5 that further comprises a coordinating agent (CORD) for coordinating substantially simultaneous transmission of a copy of a data packet by said supporting terminal (T3) and a retransmit of said data packet by said first terminal (T1).

7. An ARQ control center according to claim 5 that further comprises a generating agent (GEN(ARQ-CTRL) for generating an ARQ control signal; and
a transmitter (TRX(ARQ-CTRL)) for transmitting said ARQ control signal into said broadcast communication network.

## Patentansprüche

1. Verfahren für die Bereitstellung einer automatischen Fehlerüberwachung der Wiederholungsaufforderung in einem Rundfunk-Kommunikationsnetzwerk, wobei das Verfahren umfasst:
- einen Schritt zur Übertragung eines Datenpakets (TX1(DAT)) durch ein erstes Endgerät (T1) auf ein zweites Endgerät (T2); und
- Empfangen besagten Datenpakets und Speicherung einer Kopie besagten Datenpakets (DAT') durch ein drittes Endgerät (T3); und
- Bestimmen einer ARQ-Fehleranzeige für besagte erste Übertragung; und
- danach Durchführen eines zweiten Übertragungsschritts auf besagtes zweites Endgerät (T2), während eines identischen Zeitintervalls, von besagtem Datenpaket (TX2(DAT)) durch besagtes erstes Endgerät (T1) und der besagten Kopie besagten Datenpakets (TX2(DAT')) durch besagtes drittes Endgerät (T3), wobei besagtes Verfahren die Auswahl durch ein ARQ-Kontrollzentrum während des vorhergehenden Schrittes besagten dritten Endgeräts (T3) als ein ARQ-unterstützendes Endgerät für besagtes erstes Endgerät (T1) auf Basis einer Übertragungsqualitätsverbindung und der Aktivität in besagtem Rundfunk-Kommunikationsnetzwerk umfasst, wobei besagtes Verfahren eine Implementierung besagten Rundfunk-Kommunikationsnetzes in ein Heimatnetzwerk umfasst, das eine Vielzahl von Domänen und eine Inter-Domänen-Brücke (IDB12) umfasst, die zwischen eine erste Domäne (DOD1), umfassend besagtes erstes Endgerät (T1) und besagtes drittes Endgerät (T3); und
eine zweite Domäne (DOD2) geschaltet ist, umfassend besagtes zweites Endgerät (T2), wobei besagtes ARQ-Kontrollzentrum von besagter Inter-Domänen-Brücke (IDB2) umfasst wird, wobei besagtes Verfahren kein weiteres Weiterleiten durch besagte Inter-Domänen-Brücke (IDB12) von fehlerhaft empfangenen Paketen von besagter erster Domäne (DOD1) zu besagter zweiter Domäne (DOD2) umfasst.

2. Verfahren nach Anspruch 1, wobei besagtes Verfahren einen Koordinierungsschritt durch ein ARQ-Kontrollzentrum besagten zweiten Übertragungsschritts für eine im Wesentlichen simultane Übertragung beider Pakete umfasst.

3. Verfahren nach Anspruch 1, wobei besagtes Verfahren die Ausführung besagten Bestimmungsschritts besagter ARQ-Fehleranzeige durch ein ARQ-Zentrum auf Basis der Übertragungsqualität besagten Datenpakets in besagtem Rundfunk-Kommunikationsnetzwerk umfasst.

4. Verfahren nach Anspruch 3, wobei besagtes Verfahren weiterhin umfasst, Erzeugung eines ARQ-Kontrollsignals durch besagtes ARQ-Kontrollzentrum; und Übertragung besagten ARQ-Kontrollsignals auf besagtes Rundfunk-Kommunikationsnetzwerk.

5. Ein ARQ-Kontrollzentrum in einem Rundfunk-Kommunikationsnetzwerk, das umfasst: einen Auswahlagenten (SELECT) für die Auswahl, auf Basis der Übertragungsqualität und der Aktivität in besagtem Rundfunk-Kommunikationsnetzwerk, eines Endgeräts (T3) als ein ARQ-unterstützendes Endgerät für die Unterstützung eines ersten Endgeräts (T1); und
eine Bestimmungsmaßnahme (DET(ARQ-Fehler)) für die Bestimmung einer ARQ-Fehleranzeige, auf Basis einer Übertragungsqualität besagten Datenpakets in besagtem Rundfunk-Kommunikationsnetzwerk, für ein Datenpaket (DAT), das zuerst von besagtem ersten Endgerät (T1) auf ein zweites Endgerät (T2) übertragen wird,
wobei die ARQ-Fehleranzeige eine Übertragung einer Kopie besagten Datenpakets durch besagtes unterstützendes Endgerät (T3) während eines identischen Zeitintervalls einleitet, wobei besagtes erstes Endgerät (T1) erneut besagtes Datenpaket auf besagtes zweites Endgerät (T2) überträgt; und
wobei besagtes ARQ-Kontrollzentrum eine Inter-Domänen-Brücke (IDB12) in einem Rundfunk-Heimatnetzwerk umfasst, das zwischen eine erste Domäne (DOD1), umfassend besagtes erstes Endgerät (T1) und besagtes drittes Endgerät (T3); und eine zweite Domäne (DOD2) gekoppelt ist, umfassend besagtes zweites Endgerät (T2); und weiterhin umfasst es einen Entscheidungsagenten für die Entscheidung, fehlerhafte empfangene Pakete von besagter erster Domäne (DOD1) nicht weiter auf besagte zweite Domäne (DOD2) mittels besagter Inter-Domänen-Brücke (IDB12) zu übertragen.

6. ARQ-Kontrollzentrum in einem Rundfunk-Kommunikationsnetzwerk nach Anspruch 5, das weiterhin einen Koordinierungsagenten (CORD) für die Koordinierung der im Wesentlichen simultanen Übertragung einer Kopie eines Datenpakets durch besagtes unterstützendes Endgerät (T3) und eine erneute Übertragung besagten Datenpakets durch besagtes erstes Endgerät (T1) umfasst.

7. ARQ-Kontrollzentrum nach Anspruch 5, weiterhin umfassend:
einen Erzeugungsagenten (GEN(ARQ-CTRL) für die Erzeugung eines ARQ-Kontrollsignals; und
einen Sender (TRX(ARQ-CTRL)) zum Übertragen besagten ARQ-Kontrollsignals auf besagtes Rundfunk-Kommunikationsnetzwerk.

## Revendications

1. Procédé pour fournir un contrôle d'erreurs à demande de répétition automatique dans un réseau de communication de diffusion, le procédé comprenant les étapes suivantes :
- une première étape de transmission d'un paquet de données (TX1(DAT)) par un premier terminal (T1) vers un deuxième terminal (T2) ; et
- recevoir ledit paquet de données et stocker une copie dudit paquet de données (DAT') par un troisième terminal (T3) ; et
- déterminer une indication de défaillance ARQ pour ladite première transmission ; et
- exécuter par la suite une deuxième étape de transmission vers ledit deuxième terminal (T2), durant un intervalle de temps identique, dudit paquet de données (TX2(DAT)) par ledit premier terminal (T1) et de ladite copie dudit paquet de données (TX2(DAT')) par ledit troisième terminal (T3), et ledit procédé comprenant la sélection par un centre de contrôle ARQ durant une étape précédente dudit troisième terminal (T3) en tant que terminal de prise en charge ARQ pour ledit premier terminal (T1) sur la base d'une qualité de liaison de transmission et d'une activité dans ledit réseau de communication de diffusion, et ledit procédé comprenant la mise en oeuvre dudit réseau de communication de diffusion avec un réseau domestique qui comprend une pluralité de domaines et un pont inter-domaines (IDB12) étant couplé entre
un premier domaine (DOD1), comprenant ledit premier terminal (T1) et ledit troisième terminal (T3) ; et
un deuxième domaine (DOD2), comprenant ledit deuxième terminal (T2), et dans lequel ledit centre de contrôle ARQ est contenu dans ledit pont inter-domaines (IDB2), et ledit procédé comprenant le non-transfert par la suite, par ledit pont inter-domaines (IDB12), de paquets erronés reçus à partir dudit premier domaine (DOD1) vers ledit deuxième domaine (DOD2).

2. Procédé selon la revendication 1, dans lequel ledit procédé comprend une étape de coordination par un centre de contrôle ARQ de ladite deuxième étape de transmission pour la transmission sensiblement simultanée des deux paquets.

3. Procédé selon la revendication 1, dans lequel ledit procédé comprend l'exécution de ladite étape de détermination de ladite indication de défaillance ARQ au moyen d'un centre de contrôle ARQ sur la base d'une qualité de transmission dudit paquet de données dans ledit réseau de communication de diffusion.

4. Procédé selon la revendication 3, dans lequel ledit procédé comprend en outre, la génération par ledit centre de contrôle ARQ d'un signal de contrôle ARQ ; et la transmission dudit signal de contrôle ARQ dans ledit réseau de communication de diffusion.

5. Centre de contrôle ARQ dans un centre de communication de diffusion qui comprend un agent de sélection (SELECT) pour sélectionner, sur la base de la qualité de transmission et de l'activité dans ledit réseau de communication de diffusion, un terminal (T3) en tant que terminal de prise en charge ARQ pour prendre en charge un premier terminal (T1) ; et
des moyens de détermination (DET(ARO-Failure)) pour déterminer une indication de défaillance ARQ, sur la base d'une qualité de transmission dudit paquet de données dans ledit réseau de communication de diffusion, pour un paquet de données (DAT) qui est transmis en premier par ledit premier terminal (T1) à un deuxième terminal (T2),
ladite indication de défaillance ARQ initiant ainsi une transmission d'une copie dudit paquet de données par ledit terminal de prise en charge (T3), durant un intervalle de temps identique à celui dans lequel ledit premier terminal (T1) retransmet ledit paquet de données vers ledit deuxième terminal (T2) ; et
ledit centre de contrôle ARQ étant contenu dans un pont inter-domaines (IDB12) dans un réseau domestique de diffusion couplé entre un premier domaine (DOD1), comprenant ledit premier terminal (T1) et ledit troisième terminal (T3) ; et un deuxième domaine (DOD2), comprenant ledit deuxième terminal (T2) ; et comprend en outre un agent de décision pour décider de ne pas transférer par la suite, par ledit pont inter-domaines (IDB12), de paquets erronés reçus à partir dudit premier domaine (DOD1) vers ledit deuxième domaine (DOD2).

6. Centre de contrôle ARQ dans un réseau de communication de diffusion selon la revendication 5 qui comprend en outre un agent de coordination (CORD) pour coordonner une transmission sensiblement simultanée d'une copie d'un paquet de données par ledit terminal de prise en charge (T3) et une retransmission dudit paquet de données par ledit premier terminal (T1).

7. Centre de contrôle ARQ selon la revendication 5 qui comprend en outre
un agent de génération (GEN(ARQ-CTRL) pour générer un signal de contrôle ARQ ; et
un émetteur (TRX(ARQ-CTRL)) pour transmettre ledit signal de contrôle ARQ dans ledit réseau de communication de diffusion.
